# EUROPEAN PATENT APPLICATION

(11) **EP 4 714 753 A1**
(43) Date of publication of application: **25.03.2026**
(21) Application number: 25195137.2
(22) Date of filing: 11.08.2025
(51) Int. Cl.: B60R 16/023, B60R 16/03, H02J 7/60, B60L 3/00, B60L 3/04, B60R 16/00, H01H 39/00, H01H 85/46, H02H 3/00

(54) **POWER CUTOFF DEVICE**

(30) Priority: 20.09.2024 JP 2024164099
(71) Applicant: TOYOTA JIDOSHA KABUSHIKI KAISHA, Toyota-shi, Aichi-ken 471-8571 (JP)
(72) Inventor: YAKUSHIGAWA, Yuki, Toyota-shi, 471-8571 (JP)
(74) Representative: D Young & Co LLP

(57) **Abstract**

A power cutoff device includes a pyro-fuse device (21), a receiver (25), and a controller (22). The pyro-fuse device (21) is provided in a power system of a vehicle (10) and configured to shut off the power system when an abnormality of the vehicle (10) is detected. The receiver (25) receives a signal for requesting driving of the pyro-fuse device (21) from the outside of the vehicle (10). The controller (22) drives the pyro-fuse device (21) when the receiver (25) receives the signal.

## Description

### CROSS REFERENCE TO RELATED APPLICATIONS

This nonprovisional application is based on Japanese Patent Application No. 2024-164099 filed on September 20, 2024 with the Japan Patent Office, the entire contents of which are hereby incorporated by reference.

### BACKGROUND

### Field

The present disclosure relates to a power cutoff device.

### Description of the Background Art

As a power cutoff device of a power system, a pyro-fuse device (explosive-type cutoff switch) is known. For example, Japanese Patent Laying-Open No. 2023-35315 describes that, in a vehicle, a pyro-fuse device is provided on a power line between a battery and a load that operates with electric power from the battery, and an electric path is cut using the explosive force of the explosive in the pyro-fuse. It is described that, accordingly, application of a voltage to the power line at the time of a vehicle collision or the like can be inhibited and safety can be ensured.

In the pyro-fuse device with the foregoing configuration, the pyro-fuse device is not actuated unless a vehicle collision or the like occurs, and thus, a malfunction can cause unintended actuation of the pyro-fuse device when the pyro-fuse device or an apparatus including the pyro-fuse device is discarded or replaced.

### SUMMARY

The present disclosure has been made to solve such a problem, and an object of the present disclosure is to provide a power cutoff device capable of preventing unintended driving of a pyro-fuse device when the pyro-fuse device is discarded or replaced.

A power cutoff device according to the present disclosure includes a pyro-fuse device, a receiver, and a controller. The pyro-fuse device is provided in a power system of a vehicle and configured to shut off the power system when an abnormality of the vehicle is detected. The receiver receives a signal for requesting driving of the pyro-fuse device from the outside of the vehicle. The controller drives the pyro-fuse device when the receiver receives the signal.

By the receiver and the controller being included in the above-described power cutoff device, it is enabled, for example, for a user to connect an operation tool or the like from the outside of the vehicle and drive the pyro-fuse device from the operation tool or the like through the receiver as desired. As a result, it is enabled to prevent unintended driving of the pyro-fuse device by the user driving the pyro-fuse device as necessary when the pyro-fuse device is discarded or replaced.

The power cutoff device may further include a case in which the pyro-fuse device is housed. The case may include an opening and closing portion, and the controller may drive the pyro-fuse device on condition that the opening and closing portion is closed.

Accordingly, it is enabled to prevent fragments or the like (such as fragments of a bus bar that has been cut, or the like) caused with the driving of the pyro-fuse device from getting scattered to the outside of the case.

The controller may drive the pyro-fuse device on condition that there is a failure record indicating that an electric unit provided in the power system is having a failure.

If there is no failure record of the electric unit, it is conceivable that to drive the pyro-fuse device is unnecessary when the pyro-fuse device is replaced or discarded.

Owing to the above configuration, if there is no failure record of the electric unit, it is possible to prevent the pyro-fuse device from getting actuated through a user's erroneous operation. As a result, unintended driving of the pyro-fuse device can be prevented.

The electric unit may be a charging unit that charges a battery mounted on the vehicle with electric power supplied from a power supply outside the vehicle, and the pyro-fuse device may be provided in the charging unit.

The electric unit may be a battery unit mounted on the vehicle, and the pyro-fuse device may be provided in the battery unit.

The electric unit may be a motor drive unit mounted on the vehicle, and the pyro-fuse device may be provided in the motor drive unit.

The foregoing and other objects, features, aspects, and advantages of the present disclosure will become apparent from the following detailed description, which will be understood in conjunction with the accompanying drawings.

### BRIEF DESCRIPTION OF THE DRAWINGS

Fig. 1 is a diagram illustrating a schematic configuration of a vehicle on which a power cutoff device is mounted.
Fig. 2 is a diagram illustrating a configuration of a power cutoff device according to the present embodiment.
Fig. 3 is a diagram illustrating a state after a pyro-fuse device is driven.
Fig. 4 is a diagram illustrating a configuration of a charging unit in which the pyro-fuse device is provided.
Fig. 5 is a functional block diagram illustrating a configuration of a controller in terms of functions.
Fig. 6 is a flowchart illustrating an example of a procedure of processing executed by the controller.

### DESCRIPTION OF THE PREFERRED EMBODIMENTS

Embodiments of the present disclosure are described in detail below with reference to the drawings. In the drawings, the same or corresponding portions are denoted by the same reference characters, which will not be described repeatedly.

A case is described here as an example, where a power cutoff device of the present disclosure is mounted on a vehicle and a pyro-fuse of the power cutoff device is provided in a charging unit.

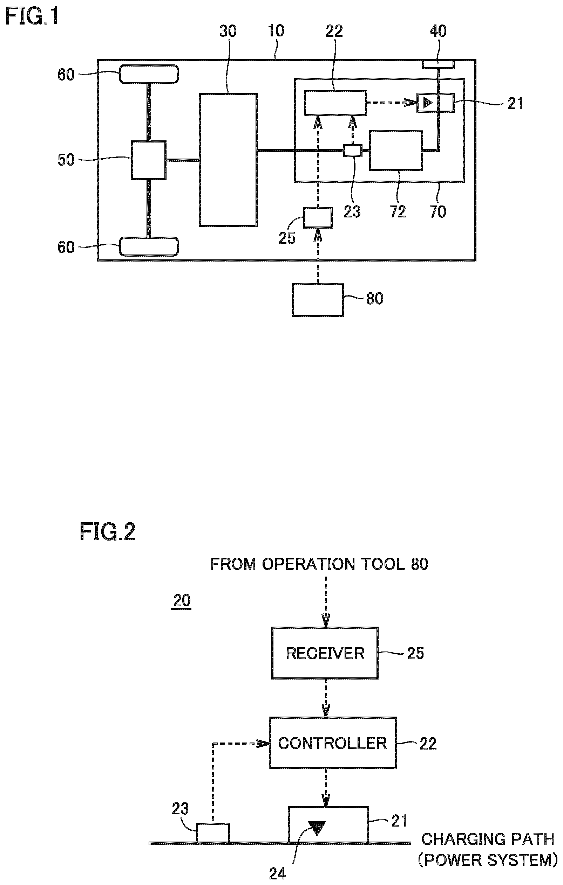

Fig. 1 is a diagram illustrating a schematic configuration of a vehicle 10 on which a power cutoff device according to the present embodiment is mounted. Although in the present embodiment, vehicle 10 is an electrically powered vehicle that can travel using the electric power stored in a battery, such as a battery electric vehicle (BEV), vehicle 10 may be a plug-in hybrid electric vehicle (PHEV) or the like in which an engine is additionally mounted.

Referring to Fig. 1, vehicle 10 includes a battery 30, a charging port 40, a driving device 50, a tire 60, a charging unit 70, and the power cutoff device.

Battery 30 is a chargeable and dischargeable power storage device and is, for example, a lithium-ion secondary battery. Battery 30 stores electric power for traveling, and can output the stored electric power to driving device 50. Further, battery 30 can store electric power supplied from a power supply outside the vehicle (hereinafter referred to as the "external power supply"), which is connected to charging port 40, and electric power regenerated by a motor (not illustrated) of driving device 50 at the time of braking of vehicle 10 for example.

Charging port 40 is configured to allow a connector of a charging cable of the external power supply, not illustrated, to be connected thereto and outputs, to charging unit 70, the electric power supplied from the external power supply to charging port 40 through the charging cable. The number of charging ports 40 in vehicle 10 may be one or be two or more. Charging port 40 may include a lid.

Charging unit 70 includes a booster 72 and the power cutoff device. When the voltage of the electric power input from charging port 40 (the electric power supplied from the external power supply) is lower than the voltage of battery 30, booster 72 boosts the voltage of the electric power input from charging port 40 and supplies the resultant electric power to battery 30. For example, when the voltage of battery 30 is 800 V and the voltage of the electric power supplied from the external power supply is 400 V, booster 72 boosts the voltage of the electric power supplied from the external power supply, which is 400 V, to 800 V and supplies the resultant electric power to battery 30. Booster 72 is constituted by, for example, a DC-DC converter including an isolation transformer.

The power cutoff device is capable of interrupting the electric path (charging path) between charging port 40 and battery 30, and is made up of a pyro-fuse device 21, a controller 22, a ground fault detector 23, and a receiver 25. In the present embodiment, pyro-fuse device 21, controller 22, and ground fault detector 23 are provided in charging unit 70, and the charging power supplied from the external power supply to battery 30 can be cut off by pyro-fuse device 21.

In Fig. 1, pyro-fuse device 21 is provided in the electric path between charging port 40 and booster 72 but may be provided in the electric path between booster 72 and battery 30. Ground fault detector 23 is provided in the electric path between booster 72 and battery 30 but may be provided in the electric path between charging port 40 and booster 72. Controller 22 and ground fault detector 23 may be provided outside charging unit 70.

Receiver 25 can communicate with an operation tool 80 outside the vehicle and can receive various signals from operation tool 80. Operation tool 80 is, for example, a scan tool, a failure diagnosis tool, or the like used by a dealer or the like, and can acquire a state of vehicle 10 and enables various settings on vehicle 10. In the present embodiment, the user (dealer) can request driving of pyro-fuse device 21 from operation tool 80. Receiver 25 may also be provided in charging unit 70 together with controller 22 and the like. The power cutoff device will be described in detail later.

Driving device 50 is a device for driving vehicle 10 and is made up of, for example, the motor and an inverter. Driving device 50 converts DC power supplied from battery 30 into AC power using the inverter to drive the motor (AC motor). Tire 60 rotates by receiving the driving force of the motor of driving device 50 to cause vehicle 10 to travel. During braking or traveling downhill of vehicle 10, for example, the motor of driving device 50 generates regenerative power by receiving the rotational force of tire 60 and battery 30 is charged accordingly.

In recent years, there has been an increasing demand for rapid charging to shorten the charging time in a vehicle, such as vehicle 10, in which an in-vehicle battery can be charged using an external power supply. In the rapid charging, the battery is charged with a high voltage and a large current, and when the voltage of the external power supply is lower than the voltage of the battery, the voltage of the electric power supplied from the external power supply is boosted and the resultant electric power is supplied to the battery. In vehicle 10, charging unit 70 is provided on a charging path, which is the power line connecting charging port 40 to battery 30, and the voltage of the charging power supplied from the external power supply through charging port 40 is boosted by charging unit 70 and battery 30 is charged accordingly.

On vehicle 10, the power cutoff device is mounted so that when a ground fault or a short circuit occurs during charging of battery 30 by charging unit 70 (hereinafter referred to as the "external charging"), a current passing through the charging path from charging port 40 to battery 30 is cut off.

Fig. 2 is a diagram illustrating a configuration of the power cutoff device according to the present embodiment. Referring to Fig. 2, power cutoff device 20 is made up of pyro-fuse device 21, controller 22, ground fault detector 23, and receiver 25.

Pyro-fuse device 21 is provided on the charging path from charging port 40 to battery 30 and can physically cut the charging path in accordance with a driving signal from controller 22. Specifically, pyro-fuse device 21 includes a cutting member 24 and a pyro-fuse driving circuit (not illustrated), and when the pyro-fuse driving circuit receives a driving signal from controller 22, the pyro-fuse driving circuit drives cutting member 24. Cutting member 24 is ejected toward the charging path by the explosive force of an explosive to physically cut the charging path. The charging path is, for example, a bus bar or wiring constituting the power line.

When a ground fault or a short circuit of the charging path is detected by ground fault detector 23, pyro-fuse device 21 is driven by controller 22 that has received a detection signal from ground fault detector 23 and the charging path is cut by cutting member 24 accordingly.

Further, when receiver 25 receives a signal for requesting the driving of pyro-fuse device 21 from operation tool 80 outside the vehicle, pyro-fuse device 21 is driven by controller 22 that has received the request signal from receiver 25 and the charging path is cut by cutting member 24 accordingly.

Ground fault detector 23 is provided on the charging path from charging port 40 to battery 30, and in this example, is provided on the electric path on the output side of booster 72 in charging unit 70. Ground fault detector 23 detects a ground fault that has occurred in the charging path and outputs a detection signal thereof to controller 22. Various known ground fault detectors can be employed as ground fault detector 23, and for example, ground fault detector 23 detects a ground fault in the charging path by detecting a change in voltage or a change in current between two high resistances connected between power lines or detecting a current balance between power lines.

Receiver 25 is an interface device for communicating with operation tool 80 (Fig. 1) outside the vehicle and, for example, receives a signal from operation tool 80 via controller area network (CAN) communication. **In** the present embodiment, the user (such as the dealer) of operation tool 80 can request the driving of pyro-fuse device 21 from operation tool 80. When receiver 25 receives a request signal for the driving of pyro-fuse device 21 from operation tool 80, receiver 25 outputs the received request signal to controller 22. The communication between operation tool 80 and receiver 25 may be wired or wireless.

Controller 22 is constituted by a microcontroller and includes a processor, memory, i.e. read only memory (ROM) and random access memory (RAM), a signal input/output port, and the like (none of which is illustrated). A ground fault detection signal from ground fault detector 23 and a signal received, by receiver 25, from operation tool 80 outside the vehicle are input from the signal input/output port, and various processes are executed by the processor in accordance with a program stored in the ROM.

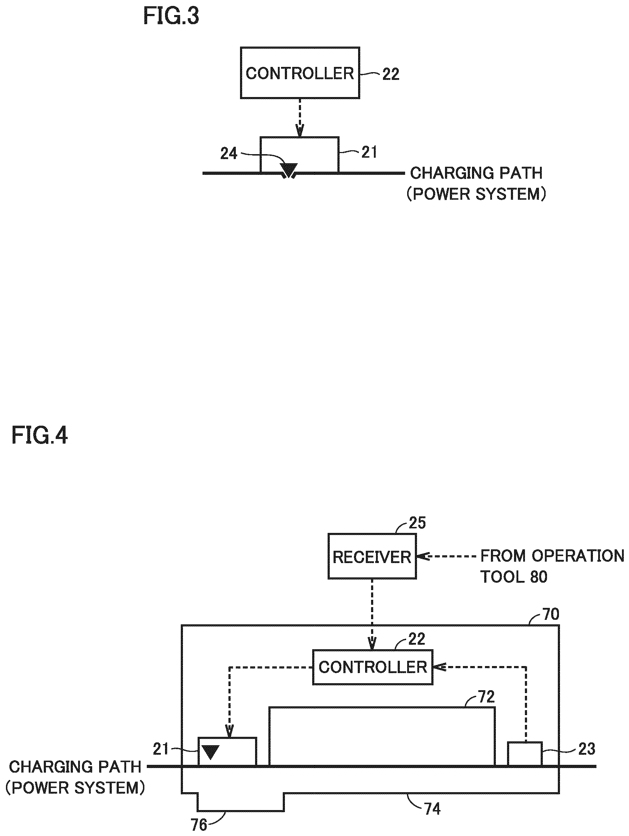

Fig. 3 is a diagram illustrating a state after pyro-fuse device 21 is driven. Referring to Fig. 3, in this example, the electric path (charging path) in the location where the pyro-fuse is arranged is constituted by a bus bar. The explosive explodes in response to a driving signal from controller 22, cutting member 24 is ejected toward the bus bar by the explosive force of the explosive, and the bus bar is cut by cutting member 24 accordingly. Cutting member 24 is constituted by, for example, an insulation member shaped like a piston and physically cuts the bus bar to disable energization.

Fig. 4 is a diagram illustrating a configuration of charging unit 70 in which pyro-fuse device 21 is provided. Referring to Fig. 4, charging unit 70 includes booster 72 and a case 74, and inside case 74, pyro-fuse device 21, controller 22, and ground fault detector 23 are housed together with booster 72.

Case 74 is provided with an opening and closing portion 76. By providing opening and closing portion 76, it is enabled to check the inside of charging unit 70, and take out pyro-fuse device 21 from charging unit 70 through opening and closing portion 76 when pyro-fuse device 21 is replaced or discarded.

A high-pressure component (booster 72) is present in case 74, and when pyro-fuse device 21 is actuated, the explosive for ejecting cutting member 24 toward the bus bar explodes and cutting member 24 is ejected toward the bus bar at a high speed. Thus, an interlock is provided with respect to opening and closing portion 76. That is, when the open/closed state of opening and closing portion 76 is detected and opening and closing portion 76 is in the open state, the energization and operation of booster 72 are disabled and the actuation of pyro-fuse device 21 is disabled.

In the present embodiment, to facilitate taking out pyro-fuse device 21 from the inside of charging unit 70 through opening and closing portion 76 in replacing or discarding pyro-fuse device 21, opening and closing portion 76 is provided near the location where pyro-fuse device 21 is arranged. Opening and closing portion 76 has strength that does not permit penetration of cutting member 24 to be ejected when pyro-fuse device 21 is actuated. Case 74 may also have strength equivalent to that of opening and closing portion 76.

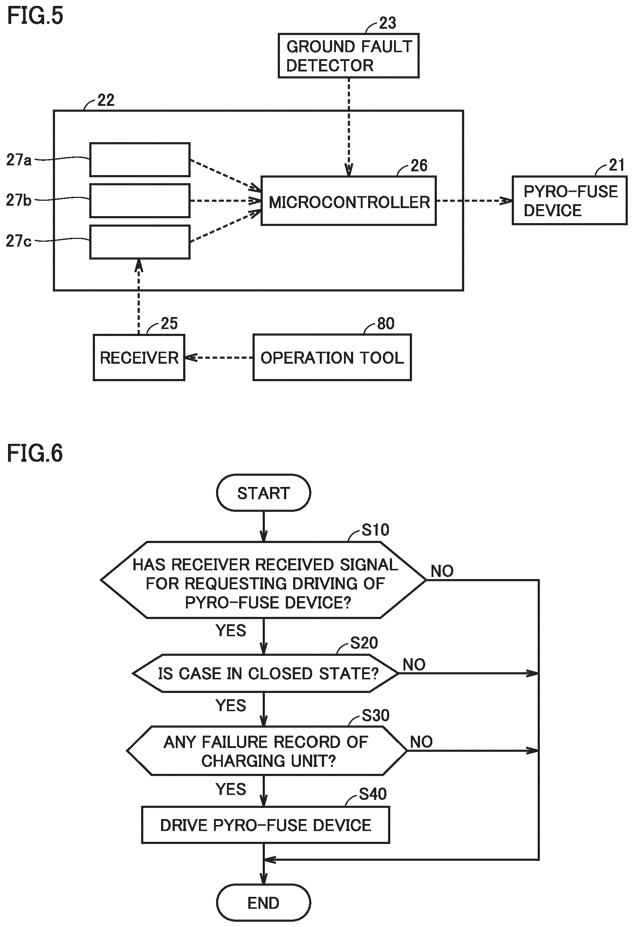

Fig. 5 is a functional block diagram illustrating a configuration of controller 22 in terms of functions. Referring to Fig. 5, controller 22 includes microcontroller 26, a case state checker 27a, a failure history checker 27b, and a signal checker 27c.

Case state checker 27a acquires a signal indicating the open/closed state of opening and closing portion 76 provided in case 74 of charging unit 70 and checks the open/closed state of opening and closing portion 76. Further, case state checker 27a outputs, to microcontroller 26, a signal that is activated (logically high) when, for example, opening and closing portion 76 is in the closed state.

Failure history checker 27b acquires information about a diagnosis (self-diagnosis) of charging unit 70. In the present embodiment, when a certain failure is detected in charging unit 70, the failure is recorded as the diagnosis. Examples of the failure recorded include a failure that needs replacement of charging unit 70. Failure history checker 27b acquires the failure history of charging unit 70 recorded through the diagnosis. Further, failure history checker 27b outputs, to microcontroller 26, a signal that is activated (logically high) when there is a failure history of charging unit 70.

From receiver 25, signal checker 27c acquires the signal from operation tool 80 outside the vehicle, which has been received by receiver 25. Further, signal checker 27c checks whether the driving of pyro-fuse device 21 is requested from operation tool 80, and outputs, to microcontroller 26, a signal that is activated (logically high) when the driving of pyro-fuse device 21 is requested.

When microcontroller 26 receives a ground fault detection signal from ground fault detector 23, microcontroller 26 outputs a driving signal for driving the pyro-fuse to pyro-fuse device 21. Further, microcontroller 26 receives the above-described output signal from each of case state checker 27a, failure history checker 27b, and signal checker 27c.

Moreover, when the signal from signal checker 27c is activated and when the respective signals from case state checker 27a and failure history checker 27b are also activated, microcontroller 26 outputs a driving signal for driving the pyro-fuse to pyro-fuse device 21. For example, microcontroller 26 computes the logical product of the respective signals from case state checker 27a, failure history checker 27b, and signal checker 27c, and when the computation result indicates that it is logically high, outputs the driving signal to pyro-fuse device 21.

As described above, in the present embodiment, pyro-fuse device 21 can be driven from operation tool 80 outside the vehicle through receiver 25, and when the driving of pyro-fuse device 21 is requested from operation tool 80, pyro-fuse device 21 is driven by microcontroller 26 on condition that opening and closing portion 76 of case 74 of charging unit 70 is in the closed state and there is a failure history of charging unit 70. Accordingly, it is enabled to prevent pyro-fuse device 21 from getting actuated when opening and closing portion 76 of case 74 is in the open state, and prevent pyro-fuse device 21 from getting actuated through an erroneous operation from operation tool 80 even while charging unit 70 is normal.

Fig. 6 is a flowchart illustrating an example of a procedure of processing executed by controller 22. The flowchart shows a preprocessing procedure in a case where pyro-fuse device 21 is discarded or replaced. When operation tool 80 is connected to vehicle 10 (receiver 25) by a user (dealer or the like) in vehicle maintenance for example, the series of processes shown in the flowchart is started.

Referring to Fig. 6, controller 22 determines whether receiver 25 has received a signal for requesting the driving of pyro-fuse device 21 from operation tool 80 (step S10). When it is determined that receiver 25 has not received the signal from operation tool 80 (NO in step S10), controller 22 shifts the processing to the end without executing the rest of the series of processes.

When it is determined in step S10 that receiver 25 has received the signal from operation tool 80 (YES in step S10), controller 22 determines whether opening and closing portion 76 of case 74 of charging unit 70 is in the closed state (step S20). When it is determined that opening and closing portion 76 is in the open state (NO in step S20), controller 22 shifts the processing to the end without executing the rest of the series of processes.

When it is determined in step S20 that opening and closing portion 76 is in the closed state (YES in step S20), controller 22 acquires a diagnosis history of charging unit 70 and determines whether there is a failure record of charging unit 70 (step S30). When it is determined that there is no failure record of charging unit 70 (NO in step S30), controller 22 shifts the processing to the end without executing step S40.

On the other hand, when it is determined in step S30 that there is a failure record of charging unit 70 (YES in step S30), controller 22 drives pyro-fuse device 21 in accordance with a request for the driving of pyro-fuse device 21 from operation tool 80 (step S40).

Although it is described above that pyro-fuse device 21 is driven when receiver 25 receives a request signal for the driving of pyro-fuse device 21 from operation tool 80 and when opening and closing portion 76 of case 74 of charging unit 70 is in the closed state (YES in step S20) and there is a failure history of charging unit 70 (YES in step S30), one or both of the respective processes of steps S20 and S30 may be omitted.

That is, even when opening and closing portion 76 of case 74 is in the open state, and for example, when the driving of pyro-fuse device 21 is allowed in a space where the entrance of a person is prohibited, the process of step S20 may be dispensed with. In addition, pyro-fuse device 21 may be driven in accordance with a request for the driving from operation tool 80 regardless of the presence or absence of a failure record of charging unit 70.

As described above, in the present embodiment, the user (dealer or the like) can connect operation tool 80 from the outside of vehicle 10 to drive pyro-fuse device 21 from operation tool 80 through receiver 25. As a result, it is enabled to prevent unintended driving of pyro-fuse device 21 by the user driving pyro-fuse device 21 as necessary when pyro-fuse device 21 is discarded or replaced.

### [Other Embodiments]

Although provided in charging unit 70 in the above-described embodiment, pyro-fuse device 21 may be provided in another high-voltage electric unit different from charging unit 70. For example, pyro-fuse device 21 may be provided in a battery unit of battery 30. Specifically, in the battery unit, pyro-fuse device 21 may be provided on a power line connected to driving device 50 or charging unit 70.

For another example, pyro-fuse device 21 may be provided in a motor drive unit constituting driving device 50. Specifically, in the motor drive unit, pyro-fuse device 21 may be provided on a power line connected to battery 30.

Although pyro-fuse device 21 is provided in case 74 of charging unit 70 in the above-described embodiment, another case to house pyro-fuse device 21 may be provided separately from charging unit 70.

Although embodiments of the present disclosure have been described above, it should be understood that the herein-disclosed embodiments are presented by way of illustration and example in all respects and are not to be taken by way of limitation. The technical scope indicated by the present disclosure is defined by the claims and intended to include all changes within the purport and scope equivalent to the claims.

## Claims

1. A power cutoff device comprising:
a pyro-fuse device (21) provided in a power system of a vehicle (10) and configured to shut off the power system when an abnormality of the vehicle is detected;
a receiver (25) that receives a signal for requesting driving of the pyro-fuse device from an outside of the vehicle; and
a controller (22) that drives the pyro-fuse device when the receiver receives the signal.

2. The power cutoff device according to claim 1, further comprising
a case (74) in which the pyro-fuse device is housed, wherein
the case includes an opening and closing portion (76), and
the controller drives the pyro-fuse device on condition that the opening and closing portion is closed.

3. The power cutoff device according to claim 1 or 2, wherein the controller drives the pyro-fuse device on condition that there is a failure record indicating that an electric unit (70) provided in the power system is having a failure.

4. The power cutoff device according to claim 3, wherein
the electric unit is a charging unit (70) that charges a battery mounted on the vehicle with electric power supplied from a power supply outside the vehicle, and
the pyro-fuse device is provided in the charging unit.

5. The power cutoff device according to claim 3, wherein
the electric unit is a battery unit mounted on the vehicle, and
the pyro-fuse device is provided in the battery unit.

6. The power cutoff device according to claim 3, wherein
the electric unit is a motor drive unit mounted on the vehicle, and
the pyro-fuse device is provided in the motor drive unit.
